# EUROPÄISCHE PATENTANMELDUNG

(11) **EP 3 338 868 A1**
(43) Veröffentlichungstag der Anmeldung: **27.06.2018**
(21) Anmeldenummer: 17206981.7
(22) Anmeldetag: 13.12.2017
(51) Int. Cl.: B01D 9/00, C01B 33/107, H01L 21/02

(54) **VERFAHREN ZUR TRENNUNG VON GEMISCHEN HÖHERER SILANE**

(30) Priorität: 21.12.2016 DE 102016225872
(71) Anmelder: Evonik Degussa GmbH, 45128 Essen (DE)
(72) Erfinder: Kerezi, Melanie, 44139 Dortmund (DE); Hengstermann, Axel, 48308 Senden (DE); Schiebelhut, Jörg, 46342 Velen / Ramsdorf (DE); Lazar, Björn, 63505 Langenselbold (DE); Haas, Wolfgang, 79618 Rheinfelden (DE); Kropfgans, Frank, 79618 Rheinfelden (DE)

(57) **Zusammenfassung**

Gegenstand der Erfindung ist ein Verfahren zur Trennung eines Gemisches höherer Halogensilane mittels Schmelzkristallisation an einer gekühlten Fläche.

## Beschreibung

Die Erfindung betrifft ein Verfahren zur Trennung eines Gemisches höherer Halogensilane mittels Schmelzkristallisation auf einer gekühlten Fläche.

Als höhere Halogensilane werden im Rahmen der Erfindung alle Halogensilane mit mindestens zwei Siliziumatomen aufgefasst.

In der Mikroelektronik kommen Perchlorsilane zum Einsatz. Beispielsweise bei der Herstellung von hochreinem Silicium mittels Epitaxie werden besonders hohe Anforderungen an die Reinheit der verwendeten Chlorsilane gestellt. Dies gilt z.B. bei der Herstellung dünner Schichten dieser Materialien. Im genannten Anwendungsgebiet stören schon Verunreinigungen der Ausgangsverbindungen im ppb- bis ppt-Bereich. Beispielsweise ist Hexachlordisilian, in der geforderten Reinheit, im Bereich der Elektronik, der Halbleiterindustrie als auch in der pharmazeutischen Industrie eine begehrte Ausgangsverbindung.

Der Stand der Technik stellt Verfahren bereit, mit denen Perchlorsilan Gemische erzeugt werden.

D. N. Andrejew (J. für praktische Chemie, 4. Reihe, Bd. 23, 1964, Seiten 288 bis 297) beschreibt die Reaktion von Siliciumtetrachlorid (SiCl₄) in Gegenwart von Wasserstoff (H₂) unter Plasmabedingungen zu Hexachlordisilan (Si₂Cl₆) und höheren chlorierten Polysilanen. Die Reaktionsprodukte fallen als Gemisch an. Nachteilig ist bei diesem Verfahren, dass dieses Produktgemisch hochviskos bis fest anfällt und sich auf der Reaktorwand niederschlagen kann. Das macht es für die weitere Verwendung schwer handhabbar.
Ein in der Industrie etabliertes Verfahren zur Aufreinigung hochreiner Stoffe bzw. zur selektiven Trennung von Komponenten ohne den Einsatz eines Lösungsmittels ist die Kristallisation, die in Form der Schmelz- oder Suspensionskristallisation durchgeführt wird. Dies sind die beiden grundsätzlichen Verfahrensvarianten:
1. Kristallisation auf einer gekühlten Fläche (Schichtkristallisation)
2. Kristallisation in der Suspension und nachfolgender Abtrennung und Aufreinigung der Kristalle mittels Waschkolonne.
Das Konzept der Schmelz- bzw. Suspensionskristallisation und die hierzu verfügbaren Technologien werden zum Beispiel in dem Aufsatz von Gerard F. Arkenbout, "Melt Crystallization Technology", Lancater / PA, Technomic Publ. Co., 1995, erläutert.

Die Suspensionskristallisation im Bereich der Schmelzkristallisation ist ein in der Industrie großtechnisch eingesetztes Verfahren zur Aufreinigung hochreiner, temperatursensibler oder nicht destillativ-aufreinigbarer Substanzen. Dabei werden im ersten Schritt die Kristalle erzeugt. In mindestens einem Behältnis, zum Beispiel in mindestens einem Kratzkühler oder Scheibenkristallisator erfolgt die Kristallisation aus einer unterkühlten Schmelze heraus. Die abzuführende Kristallisationswärme wird dabei über ein entsprechendes Kühlmedium indirekt, d.h. über eine wärmeübertragende Zwischenwand, abgeführt. In einem zusätzlichen Wachstumsbehälter wird der Schmelze Zeit gegeben, um die aufgeprägte Übersättigung durch Unterkühlung durch Wachstum der vorhandenen Keime und Kristallen abzubauen. Die Kristalle reifen / wachsen dadurch auf eine entsprechende Größe. (Günther Hofmann, Kristallisation in der industriellen Praxis, 2004, Wiley- VHH Verlag GmbH & Co. KIGaA, Weinheim). Im einem zweiten Schritt werden die Kristalle von der Mutterlauge getrennt und gewaschen, um die in der anhaftenden Mutterlauge Nebenkomponenten zu entfernen, so dass die geforderte Reinheit sichergestellt werden kann. Idealerweise wird in der Industrie die Abtrennung der Kristalle von der Mutterlauge mit der anschließenden Kristallwäsche in einem Apparat, einer sog. Waschkolonne kombiniert. Dabei unterscheiden sich die sog. Waschkolonnen lediglich im Transport des sog. Kristallbett. Der Transport wird entweder mechanisch über Kolben bzw. Schrauben oder hydraulisch über den Fließwiderstand des Kristallbetts realisiert.

Die vorliegende Erfindung löst die Aufgabe, ein wirtschaftliches Verfahren zur Aufreinigung von Gemischen höherer Halogensilane bereitzustellen.

Es wurde gefunden, dass mittels Kristallisation ein Gemisch, das zumindest eine der Komponenten Si₂Cl₆, Si₃Cl₈, n-Si₄Cl₁₀,i-Si₄Cl₁₀, n-Si₅Cl₁₂, i-Si₅Cl₁₂ und/oder neo-Si₅Cl₁₂ enthält, in mindestens zwei Fraktionen aufgetrennt werden kann.

Gegenstand der Erfindung ist ein Verfahren zur Trennung eines Gemisches höherer Halogensilane mittels Schmelzkristallisation an einer gekühlten Fläche, welches dadurch gekennzeichnet ist, dass
a) das Gemisch mit einer Fläche in statisch ruhenden oder dynamisch fließenden Kontakt gebracht wird, und
   die Temperatur der Fläche abgesenkt wird, wobei
   zumindest eine Komponente des Gemisches an der gekühlten Fläche übersättigt und sich als kristalline Phase auf der gekühlten Fläche abscheidet, und
   ein abgereichertes Gemisch erhalten wird, und anschließend
b) das abgereicherte Gemisch abgelassen wird, und anschließend
c) die Temperatur der Fläche erhöht wird, wobei
   zumindest ein Schmelzpunkt zumindest einer Komponente in der kristallinen Phase nahezu erreicht, erreicht oder überschritten wird, und die schmelzende Komponente oder Komponenten, genannt Schwitzfraktion, die kristalline Phase als flüssige Phase verlassen, und
   anschließend diese Schwitzfraktion abgelassen und separiert wird, wobei eine angereicherte kristalline Phase an der Fläche zurück bleibt,
   und anschließend
d) die Temperatur der Fläche weiter erhöht wird, wobei die angereicherte kristalline Phase vollständig geschmolzen wird.

Unter dem Ausdruck, einen *"Schmelzpunkt nahezu erreichen",* wird im Rahmen der Erfindung verstanden, die Temperatur in einem Bereich von 5 K bis 0,1 K, vorzugsweise von 1 K bis 0,1 K unter einen Schmelzpunkt einzustellen.
Ist der Schmelzpunkt einer Komponente *nahezu erreicht,* liegt ein Teil des Volumens dieser Komponente, jedoch nicht das gesamte Volumen dieser Komponente, als flüssige Phase vor.

Das Verfahren hat den unerwarteten Vorteil, dass selektiv zumindest eines der höheren Halogensilane in der angereicherten kristallinen Phase konzentriert vorliegt und aus dieser Phase zumindest eines der höheren Halogensilane ausgeschwitzt werden kann. Somit werden erfindungsgemäß höhere Halogensilane in Reinform erhalten. Diese können aufgrund ihrer unterschiedlichen Produkteigenschaften gezielt für weitere Anwendungen eingesetzt werden. Das Verfahren wird im Folgenden näher erläutert.

Vorzugsweise wird in dem erfindungsgemäßen Verfahren ein Doppelmantelgefäß eingesetzt, das die kühlbare Fläche in Form eines Kühlfingers aufweist. Vorzugsweise werden Kühlfinger und Mantel unabhängig voneinander thermostatisiert.

Es kann vorteilhaft sein, im Schritt a Kühlfinger und Mantel auf unterschiedliche Temperaturen abzusenken und diesen Temperaturen anschließend zu halten, wobei das zwischen Kühlfinger und Mantel befindliche Gemisch am Kühlfinger mindestens eine kristalline Phase bildet.

Vorzugsweise ist im Schritt a die Temperatur am Kühlfinger niedriger, als am Mantel, bevorzugt in einem Bereich von 1 K bis 50 K geringer. Besonders bevorzugt liegt die Temperatur des Kühlfingers um 1 K bis 40 K , weiterhin besonders bevorzugt um 1 K bis 10 K niedriger, als am Mantel.

Weiterhin bevorzugt wird zunächst das Gemisch höherer Halogensilane zwischen Kühlfinger und Mantel gebracht und anschließend im Schritt a die Temperatur oder Temperaturen gesenkt und zumindest bei einem Wert am Kühlfinger von minus 10 °C bis minus 50 °C erhalten. Bevorzugt wird die Temperatur am Kühlfinger und/oder Mantel abgesenkt, indem ausgehend von Raumtemperatur, dies sind im Rahmen der Erfindung 20 °C, in linearen Schritten die Temperatur abgesenkt wird, beispielsweise mittels linearer Temperatursteuerung in Schritten von 0,1 K/min bis 3 K/h. Weiterhin bevorzugt wird die Manteltemperatur ebenfalls abgesenkt und dann jedoch oberhalb der Temperatur des Mantels gehalten, vorzugsweise in einem Bereich von 1 K bis 10 K über der Temperatur des Mantels. Die Absenkung der Temperatur des Mantels kann mittels linearer Temperatursteuerung in Schritten von 0,1 K/min bis 2 K/h erfolgen. Die Temperaturen am Mantel bzw. Kühlfinger können unterschiedlich schnell abgesenkt werden. Bevorzugt können Mantel und Kühlfinger nach unterschiedlichen oder gleichen Zeiträumen die unterschiedlichen Temperaturen gemäß Schritt a erreicht haben, auf denen sie gehalten werden.

Es kann vorteilhaft sein, ein Gemisch höherer Chlorsilane in dem erfindungsgemäßen Verfahren einzusetzen, das zumindest zwei der höheren Silane Si₂Cl₆, Si₃Cl₈, n-Si₄Cl₁₀, i-Si₄Cl₁₀, n-Si₅Cl₁₂, i-Si₅Cl₁₂, neo-Si₅Cl₁₂ aufweist, vorzugsweise n-Si₄Cl₁₀ und zumindest eines der übrigen höheren Silane. In dem erfindungsgemäßen Verfahren kann auch Neopentasilan abgetrennt oder zumindest aufgereinigt werden.

Die zusammenhängende kristalline Phase hat die Form einer Kristallschicht.
Ohne an eine bestimmte Theorie gebunden zu sein, sind die Erfinder der Auffassung, dass diese Kristallschicht kristalline Phasen zumindest eines Silan-Isomers aufweist, in dessen oder deren Kristallgitter andere, vorzugsweise die übrigen, nicht kristallisierten Silane mindestens teilweise eingeschlossen sind. Diese eingeschlossenen Silane sind zumindest ein Bestandteil der Schwitzfraktion.

Im Schritt c des Verfahrens kann die Temperatur jeweils am Kühlfinger und am Mantel erhöht werden, und anschließend werden beide Temperaturen auf den jeweils eingestellten Werten gehalten. Die am Kühlfinger erhaltene kristalline Phase sondert während dieses Zeitraumes die Schwitzfraktion ab.

Vorzugsweise werden die Temperaturen jeweils in Schritten erhöht, beispielsweise mittels einer linearen Temperatursteuerung erhöht, deren Schrittweite eingestellt werden kann und beispielsweise in einem Bereich von jeweils 0,1 K/h bis 5 K/h liegen kann. Die schrittweise Temperaturerhöhung kann am Kühlfinger und am Mantel in unterschiedlichen oder in gleichen Schritten erfolgen, vorzugsweise in gleichen Schritten.

Die jeweils am Mantel bzw. am Kühlfinger erreichten Temperaturen sind vorzugsweise unterschiedlich. Vorzugsweise werden diese erreichten Temperaturen während eines Zeitraumes gehalten, der in einem Bereich von 10 min bis 24 Stunden liegt. Die Dauer, während der die Temperaturen gehalten werden, kann danach gerichtet sein, welche Menge an Schwitzfraktion erhalten wird.

In einer weiteren vorteilhaften Ausführungsform des Verfahrens werden die Schritte b und/oder c zumindest einmal wiederholt. Bei jeder Wiederholung kann Schritt b und/oder Schritt c mit einer höheren Temperatur begonnen werden, als zu Beginn des Schrittes b und /oder c bei der vorangehenden Durchführung des Verfahrens. So können mehrere Schwitzfraktionen erhalten werden, oder das Verfahren kann rekursiv durchgeführt werden. Dies ist gleichbedeutend mit dem Fall, dass mindestens eine der erfindungsgemäß erhaltenen Fraktionen mehrere höhere Chlorsilane aufweist. Das oder jedes Gemisch aus Schritt b und/oder die im Schritt c abgelassene Schwitzfraktion können erneut als Gemisch höherer Chlorsilane eingesetzt und das erfindungsgemäße Verfahren an ebendieser durchgeführt werden. Vorzugsweise kann man mindestens zwei Schwitzfraktionen vereinen und an dem so erhaltenen Gemisch höherer Halogensilane das erfindungsgemäße Verfahren durchführen, beispielsweise dann, wenn der Schritt c zumindest einmal wiederholt worden ist.

### Ausführungsbeispiele

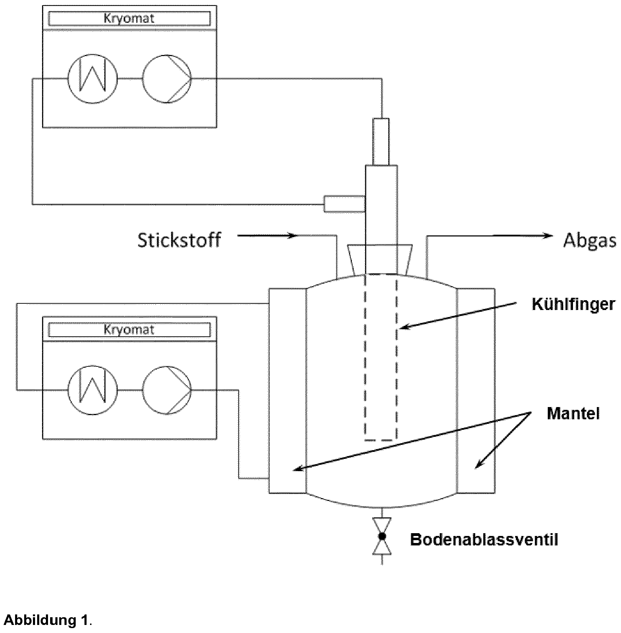

In jedem Beispiel wurde eine Apparatur für Schmelzkristallisation eingesetzt, die aus einem 200 ml Doppelmantelgefäß bestand, welches über den Doppelmantel temperiert werden konnte. Über einen oberen Schliffeinsatz war ein Kühlfinger mit einem Durchmesser von 14 mm eingesetzt. Der Kühlfinger wurde über einen zusätzlichen Thermostaten gekühlt bzw. geheizt. Das Schema der Apparatur ist in **Abbildung 1** gezeigt.

Durch eine Absenkung der Temperatur des Kühlfingers, gleichbedeutend mit seiner Oberflächentemperatur, kam es durch Unterschreiten der Fest-Flüssig-Gleichgewichtstemperatur zur Bildung zumindest eines kristallinen Belages aus Teilen des Gemisches.

Nicht kristallisierte Teile und Teile des Gemisches außerhalb des oder der kristallinen Beläge zwischen Mantel und Kühlfinger sind im Rahmen der Erfindung mit "*Schmelze*" bezeichnet. Sobald eine entsprechende Menge an kristallinem Belag oder Belägen am Kühlfinger abgeschieden war, wurde die Schmelze aus dem Behälter abgelassen.

### Beispiel 1

Es wurden 352,9 g eines n- und i- Si₄Cl₁₀ aufweisenden Gemisches, im Rahmen der Erfindung "*Feed*" genannt, in die Apparatur eingefüllt.

Mit Hilfe einer linearen Temperatursteuerung von 0,2 K/min wurden Mantel- und Kühlfingertemperatur abgesenkt, beginnend bei Raumtemperatur. Die Temperatur am Mantel wurde dabei etwa 5 K oberhalb der Temperatur am Kühlfinger gefahren.

Bei einer Kühlfingertemperatur von minus 35 °C wurde die Bildung erster kristalliner Beläge auf dem Kühlfinger beobachtet. Diese Temperatur wurde während 145 min gehalten, so dass eine Kristallschicht erhalten wurde. Da sich eine ausreichende Menge des kristallinen Belages auf dem Kühlfinger abgeschieden hatte, wurde die Schmelze nach den 145 min in einer Menge von 213,7 g über das Bodenablassventil abgelassen, ohne dass die Temperatur weiter abgesenkt wurde. Nachdem die Schmelze abgelassen worden war, wurde die Temperatur des Kühlfingers und des Mantels auf 20 °C eingestellt und die Kristallschicht total geschmolzen. Es wurde eine Menge von 131,5 g abgelassen. Die erhaltenen Proben wurden mittels Si-NMR analysiert. Die Zusammensetzung zeigt **Tabelle 1.**

**Tabelle 1.**

| | Feed | Schmelze | Kristalle |
|---|---|---|---|
| | Gew.-% | Gew.-% | Gew.-% |
| SiCl4 | 0 | 0 | 0 |
| Si2Cl6 | 0,2 | 0,2 | 0,1 |
| Si3Cl8 | 5,7 | 6 | 4,5 |
| n-Si4Cl10 | 77,7 | 74,4 | 82 |
| i-Si4Cl10 | 13,5 | 17 | 10,6 |
| i-Si5Cl12 | 2,2 | 1,8 | 2 |
| n-Si5Cl12 | 0,6 | 0,6 | 0,7 |
| neo-Si5Cl12 | 0 | 0 | 0 |

### Beispiel 2

Es wurden 332,9 g des Si₄Cl₁₀ aufweisenden Gemisches aus höheren Chlorsilanen als Feed in die Apparatur eingefüllt. Mit Hilfe einer linearen Temperatursteuerung von 0,1 K/min wurden Mantel- und Kühlfingertemperatur beginnend bei Raumtemperatur abgesenkt. Die Manteltemperatur wurde dabei immer etwa 7 K oberhalb der Kühlfingertemperatur gefahren.

Bei einer Kühlfingertemperatur von minus 16°C wurde die Bildung erster kristalliner Beläge auf dem Kühlfinger beobachtet. Die Temperaturabsenkung wurde gestoppt, so dass die Bildung eines zusammenhängenden kristallinen Belages sichergestellt werden konnte. Nach 20 min wurde mit der Temperaturabsenkung weiterverfahren. Bei einer Temperatur von -25°C wurde die Temperaturabsenkung angehalten, da sich eine ausreichende Kristallmenge auf dem Kühlfinger abgeschieden hatte. Über das Bodenablassventil wurde eine Menge von etwa 280 g Schmelze abgelassen. Nachdem die Schmelze abgelassen wurde, wurde die Temperatur des Kühlfingers und des Mantels auf 20°C eingestellt und die Kristallschicht total geschmolzen. Die erhalten Proben wurden mittels Si-NMR analysiert. Die Ergebnisse zeigt **Tabelle 2.**

**Tabelle 2.**

| | Feed | Schmelze | Kristalle |
|---|---|---|---|
| | Gew.-% | Gew.-% | Gew.-% |
| SiCl4 | 0 | 0 | 0 |
| Si2Cl6 | 0,1 | 0,2 | 0,2 |
| Si3Cl8 | 4,7 | 5,4 | 3,4 |
| n-Si4Cl10 | 80,1 | 78 | 85,3 |
| i-Si4Cl10 | 12,8 | 13,8 | 8 |
| i-Si5Cl12 | 1,8 | 2 | 2,4 |
| n-Si5Cl12 | 0,5 | 0,6 | 0,7 |
| neo-Si5Cl12 | 0 | 0 | 0 |

### Beispiel 3

Es wurden 367,86 g des Si₄Cl₁₀ aufweisenden Gemisches (Feed) in die Apparatur gefüllt.

Die Kühlfinger- und Manteltemperatur wurden mit einer linearen Temperatursteuerung abgekühlt. Bei einer Kühlfingertemperatur von minus 37,7 °C bildeten sich die ersten kristallinen Beläge. Die Manteltemperatur betrug zu diesem Zeitpunkt minus 31,0 °C. Die Temperaturabsenkung wurde gestoppt, um das Wachstum der Kristalle zuzulassen.

Beide Temperaturen wurden wieder erhöht und anschließend für einen Zeitraum von 15 Stunden die Kühlfingertemperatur auf minus 27,5 °C und die Manteltemperatur auf minus 10 °C gehalten. Es wurde ein zusammenhängender kristalliner Belag am Kühlfinger erhalten.

Über das Bodenablassventil wurden anschließend 230,2 g Schmelze abgelassen. Daraufhin wurde die Kühlfingertemperatur mit einer linearen Temperaturführung von 1,5 K/h schrittweise erhöht um den kristallinen Belag schwitzen zu lassen. Es wurden insgesamt sieben Schwitzfraktionen abgelassen. Davon wurde die zweite Schwitzfraktion bei einer Kühlfingertemperatur von minus 14,8 °C in einer Menge von 8,4 g und die dritte bei einer Kühlfingertemperatur von minus 13,2 °C (Menge 22,43 g) abgelassen. Diese beiden Schwitzfraktionen wurden vereinigt und analysiert. Das Analysenergebnis zeigt **Tabelle 3.**

Bei einer Kühlfingertemperatur von minus 5 °C wurde der Schwitzvorgang beendet und die Kristallschicht in einer Menge von 52,8 g komplett aufgeschmolzen.

**Tabelle 3.**

| | Feed | Schmelze | Kristalle | 2.+3. Schwitzfraktion |
|---|---|---|---|---|
| | Gew.-% | Gew.-% | Gew.-% | Gew.-% |
| SiCl4 | 0 | 0 | 0 | 0 |
| Si2Cl6 | 0,6 | 0,8 | 0,4 | 0,4 |
| Si3Cl8 | 2,7 | 2,9 | 2,8 | 1,5 |
| n-Si4Cl10 | 80,8 | 76,5 | 92,4 | 79,7 |
| i-Si4Cl10 | 14,7 | 18,1 | 4,3 | 16,8 |
| i-Si5Cl12 | 1,2 | 1,7 | 0,1 | 1,6 |
| n-Si5Cl12 | 0 | 0 | 0 | 0 |
| neo-Si5Cl12 | 0 | 0 | 0 | 0 |

## Patentansprüche

1. Verfahren zur Trennung eines Gemisches höherer Halogensilane mittels Schmelzkristallisation an einer gekühlten Fläche,
**dadurch gekennzeichnet, dass**
a) das Gemisch mit einer Fläche in statisch ruhenden oder dynamisch fließenden Kontakt gebracht wird, und
die Temperatur der Fläche abgesenkt wird, wobei
zumindest eine Komponente des Gemisches an der gekühlten Fläche übersättigt und sich als kristalline Phase auf der gekühlten Fläche abscheidet, und
ein abgereichertes, flüssiges Gemisch erhalten wird, und anschließend
b) das abgereicherte Gemisch abgelassen wird, und anschließend
c) die Temperatur der Fläche erhöht wird, wobei
zumindest ein Schmelzpunkt zumindest einer Komponente in der kristallinen Phase nahezu erreicht, erreicht oder überschritten wird, und die schmelzende Komponente oder Komponenten, genannt Schwitzfraktion, die kristalline Phase als flüssige Phase verlassen, und
anschließend diese Schwitzfraktion abgelassen und separiert wird, wobei eine angereicherte kristalline Phase an der Fläche zurück bleibt,
und anschließend
d) die Temperatur der Fläche weiter erhöht wird, wobei die angereicherte kristalline Phase vollständig geschmolzen wird.

2. Verfahren nach Anspruch 1, wobei das Einsatzgemisch zumindest zwei der höheren Silane Si₂Cl₆, Si₃Cl₈, n-Si₄Cl₁₀, i-Si₄Cl₁₀, n-Si₅Cl₁₂, i-Si₅Cl₁₂, neo-Si₅Cl₁₂ aufweist, vorzugsweise n-Si₄Cl₁₀ und zumindest eines der übrigen höheren Silane.

3. Verfahren nach Anspruch 1 oder 2 , wobei die Schritte b und/oder c zumindest einmal wiederholt werden.

4. Verfahren nach einem der vorhergehenden Ansprüche, wobei das Gemisch aus Schritt b und/oder die im Schritt c abgelassene Schwitzfraktion als das Gemisch der höheren Silane eingesetzt wird, oder,
falls der Schritt c zumindest einmal wiederholt wird, zumindest zwei Schwitzfraktionen vereint als das Gemisch höherer Silane eingesetzt werden.

5. Verfahren nach einem der vorhergehenden Ansprüche, wobei die Schmelzkristallisation als Suspensionskristallisation durchgeführt wird.
